# EUROPEAN PATENT SPECIFICATION

(11) **EP 4 121 903 B1**
(45) Date of publication and mention of the grant of the patent: **28.10.2026**
(21) Application number: 20712941.2
(22) Date of filing: 19.03.2020
(51) Int. Cl.: G06N 3/045, G06N 3/0464, G06N 3/09, G06N 3/063

(54) **TEMPORAL FILTERING IN A LAYERED MACHINE LEARNING MODEL**
ZEITLICHE FILTERUNG IN EINEM GESCHICHTETEN MASCHINENLERNMODELL
FILTRAGE TEMPOREL DANS UN MODÈLE D'APPRENTISSAGE AUTOMATIQUE EN COUCHES

(43) Date of publication of application: 25.01.2023
(73) Proprietor: Huawei Technologies Co., Ltd., Shenzhen, Guangdong 518129 (CN)
(72) Inventor: MOUSHKATEL, Haim, 80992 Munich (DE); MIZRACHI, Dror, 80992 Munich (DE); KESELMAN, Ariel, 80992 Munich (DE)
(74) Representative: Gill Jennings & Every LLP
(86) International application number: PCT/EP2020/057626
(87) International publication number: WO 2021/185448

(56) References cited:
- US-A1- 2019 180 168
- SHAFIEE MOHAMMAD SAEED ET AL: "Dynamic Representations Toward Efficient Inference on Deep Neural Networks by Decision Gates", 2019 IEEE/CVF CONFERENCE ON COMPUTER VISION AND PATTERN RECOGNITION WORKSHOPS (CVPRW), IEEE, 16 June 2019 (2019-06-16), pages 667 - 675, XP033747036, DOI: 10.1109/CVPRW.2019.00093
- YUNTENG LUAN ET AL: "MSD: Multi-Self-Distillation Learning via Multi-classifiers within Deep Neural Networks", ARXIV.ORG, CORNELL UNIVERSITY LIBRARY, 201 OLIN LIBRARY CORNELL UNIVERSITY ITHACA, NY 14853, 21 November 2019 (2019-11-21), XP081536955

## Description

### FIELD OF THE DISCLOSURE

The present disclosure, in some embodiments thereof, relates to a device and a method for inference from data records using a layered machine learning model and, more particularly, a neural network which is limited in memory, bandwidth, and processing power usage.

### BACKGROUND

Architectures based on neural networks have enabled breakthroughs in computer vision tasks such as classification, recognition, detection, super resolution, facial recognition, segmentation, etc. Additionally, similar techniques have been applied to a growing range of domains, including text, sound and time series. However, increasingly deep neural networks require billions of calculations, which impose a heavy load on memory, processing power, and energy consumption. Several strategies have been applied to mitigate this problem, which limits the application of cutting-edge neural networks, especially on embedded systems. Some implementations quantize, encode, or prune weights or filters with a lower contribution to a confidence level of the network inference.

Mohammad Saeed Shafiee et al, "Dynamic Representations Toward Efficient Inference on Deep Neural Networks by Decision Gates", 2019 IEEE/CVF Conference on computer vision and pattern recognition workshops, 2019, pp 667-675 discloses the concept of decision gates (d-gate), modules trained to decide whether a sample needs to be projected into a deeper embedding or if an early prediction can be made at the d-gate, thus enabling the computation of dynamic representations at different depths.

### SUMMARY

The invention is defined in the appended independent claims, with the dependent claims outlining optional embodiments.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

According to embodiments of the method and/or device of the disclosure, several selected tasks could be implemented by hardware, software, firmware, or a combination thereof using an operating system.

For example, hardware for performing selected tasks according to embodiments of the disclosure could be implemented as a chip or a circuit. As software, selected tasks according to embodiments of the disclosure could be implemented as a plurality of software instructions being executed by a computer using any suitable operating system. In an exemplary embodiment of the disclosure, one or more tasks according to exemplary embodiments of a method and/or device as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a schematic illustration of an exemplary device with temporal filtering for inference from data records, according to some embodiments of the present disclosure;
FIG. 2 is a flow chart of an exemplary process for training a device with temporal filtering for inference from data records, according to some embodiments of the present disclosure;
FIG. 3 is a flow chart of an exemplary process with temporal filtering for inference from data records, according to some embodiments of the present disclosure;
FIG. 4 is a sequence diagram of an exemplary process with temporal filtering for inference from data records, according to some embodiments of the present disclosure;
FIG. 5 is a sequence diagram illustrating an exemplary process with temporal filtering for inference from data records, according to some embodiments of the present disclosure;
FIG. 6 is a diagram illustrating a computer-implemented method of training a device with temporal filtering for inference from data records, according to some embodiments of the present disclosure;
FIG. 7 is a diagram illustrating an exemplary computer-implemented method with temporal filtering for inferencing from data records, according to some embodiments of the present disclosure;
FIG. 8A depicts an exemplary time series processed by an exemplary inference device with temporal filtering, and a respective indication when the device main branch is activated, according to some embodiments of the present disclosure; and
FIG. 8B depicts an exemplary sequence of images processed by an exemplary inference device with temporal filtering, and a respective indication when the device main branch is activated, according to some embodiments of the present disclosure.

### DETAILED DESCRIPTION

The present disclosure, in some embodiments thereof, relates to a technique to be applied in a layered machine learning model and, more particularly, but not exclusively, a neural network, which is limited in compute resources, memory, bandwidth, and processing power usage.

Some embodiments of the present disclosure may be used to make inferences, in computing units with limited computational capacity, for instance with limited memory, computation power, and/or limited energy source.

Some implementations are based on training and/or executing a layered machine learning model, such as a neural network, having a network architecture that is enhanced with support for early decision breaks. The enhancement comprises one or more additional branches having exit points, namely a multi-branch architecture. The additional exit points, namely side branches, may be based on storing inference results, and values at points chosen from interim layers, or smaller layers branching therefrom. Following values generated at comparative points may be compared with former stored values. The values stored to support these enhancements may be from exit points of branches, points from interim layers that may be shared by branches, and/or points specific to a branch.

As used herein, the terms "first" and "former" are used interchangeably, and should be construed to comprise data records, processing cycles, values and/or the likes preceding one or more "second", "following" or "consecutive" data records, processing cycles, feeding iterations, values, and/or the likes mentioned in the same context. Furthermore, as used herein, the terms "second" , "following" and "consecutive" are used interchangeably, and should be construed to comprise data records, processing cycles, feeding iterations, values, and/or the likes other than first, and following a "first" or a "former" data records, processing cycles, values, and/or the likes mentioned in the same context. Similarly the term "first iteration values" refers to values generated by processing the former data record which are stored as "exit values", and the term "second iteration values" refers to test values generated by processing the following data record.

As used herein, the term "exit point" refers to a code, a logic, or the like, supporting an option to conclude the inference without executing further layers. The inference may be concluded using an inference rule based on a former inference such as the first inference. The terms "early exit", "side branch exit point" and "side branch exit" may be used interchangeably. Similarly, the terms "main branch exit point" and "main branch exit" may be used interchangeably.

When inferences are made from consecutive data records, the values at these points may be compared to formerly evaluated data records. When the changes in these points, compared to a former record, are insignificant, there may be an adequate confidence that the data record is compliant with the inference of that former data record. The values at these points are sufficiently informative for inferences, such as the classification, of many data records. This allows achieving an inference, such as a classification, at an early layer of the layered machine learning model. These early decisions may help reduce average computation time, data bandwidth and/or energy consumed for inferences such as classification, especially when the machine learning model is deep, having dozens or even hundreds of layers.

Before explaining at least one embodiment of the disclosure in detail, it is to be understood that the disclosure is not necessarily limited in its application to the details of structure and/or the arrangement of the components and/or methods set forth in the following description and/or illustrated in the drawings and/or the examples. The disclosure is capable of other embodiments or of being practiced or carried out in various ways.

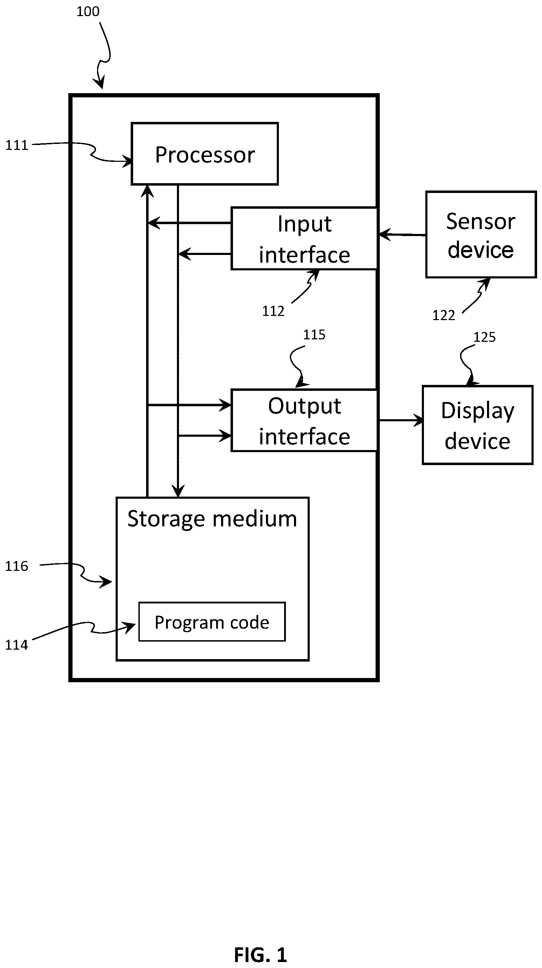

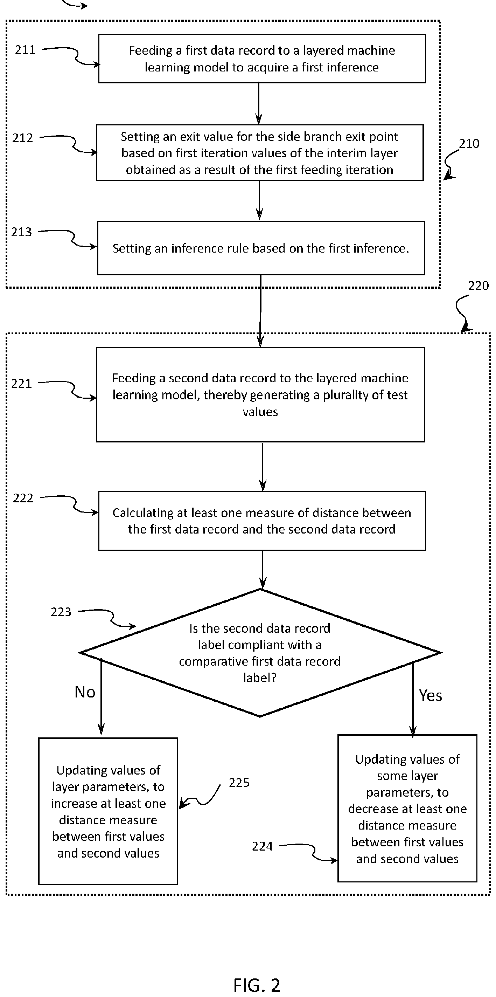

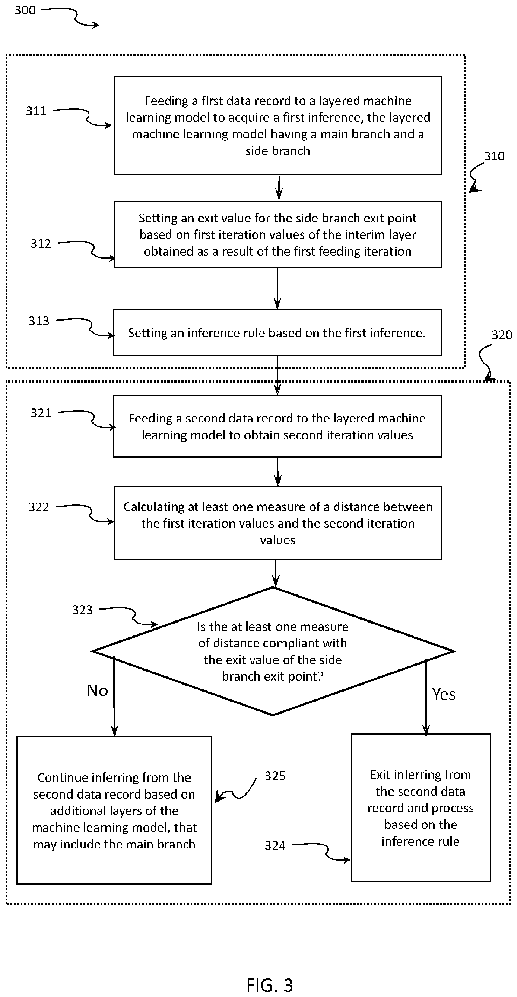

Referring now to the drawings, FIG. 1 is a schematic illustration of an exemplary device with temporal filtering for inference from data records, according to some embodiments of the present disclosure. An exemplary inference device 100 may execute processes, such as processes 200 and/or 300, which will be described in FIG. 2 and FIG. 3 and may be applied for training a system or a device with temporal filtering for inference from data records, and/or using the system or the device for inference, respectively.

The inference device 100 may include an input interface 112, an output interface 115, a processor 111, and a storage medium 116 for storing a program code 114 and/or data. The processor 111 may execute program code 114, which may comprise executing processes, such as process 200 and/or process 300, which will be described in FIG. 2 and FIG. 3. The inference device 100 may be physically located on a site, and/or implemented on a mobile device, an internet of things (IOT) device, as a distributed system, virtually on a cloud service, on machines also used for other functions, and/or by several other options. In some implementations, parts of the system, for example early and interim layers associated with a side branch, may be implemented on a device, such as a cellular phone, an IOT module, a security camera, a battery-operated microphone, and/or the likes. However, other parts, for example, the main branch, may be implemented on a personal computer, on the cloud, and/or the likes.

Devices, particularly mobile devices with limited battery power supply, benefit from early classification, which saves execution time and power of further layers. Machine learning models may have many layers, for example, 19, 35, 50, and some architectures comprise more than one neural network and/or hundreds of layers. Furthermore, a layer may comprise a tensor with dimensions such as 256x256x128, or 64x64x512, tensors of more than three dimensions, and/or the likes. Therefore, the use of a deep layered machine learning model may be demanding in compute resources such as memory, processing power, and energy consuming, especially under the tight budget of compact battery-operated devices. The use of temporal filtering enables processing using only a part of these layers for some of the data records, thereby saving compute resources.

When latency, power, CPU usage and memory usage impose a tight constraint, the device may comprise dedicated hardware, FPGA, edge computer, and/or the likes. It should be noted that application-specific hardware may account for better speed and lower power consumption, however, it may require additional resources during design and limit flexibility in system updates. When precision is a crucial factor, the system may be implemented on a dedicated server, computer farm, the cloud, and/or the likes. Furthermore, a battery-operated, low-power, low CPU edge device may be designed or configured to execute code associated with the device, or one or more side branches. In these examples, the code may be optimized for fewer power consuming operations, memory usage, and/or the likes.

The input interface 112 and the output interface 115 may comprise one or more wired and/or wireless network interfaces for connecting to one or more networks, for example, a local area network (LAN), a wide area network (WAN), a metropolitan area network, a cellular network, the internet and/or the like. The input interface 112 and the output interface 115 may further include one or more wired and/or wireless interconnection interfaces, for example, a universal serial bus (USB) interface, a serial port, a controller area network (CAN) bus interface and/or the like. Furthermore, the output interface 115 may include one or more wireless interfaces for loudspeakers, display, medical devices, and/or the like, as well as other processors executing post-processing. The input interface 112 may include one or more wireless interfaces for receiving information from one or more devices. Additionally, the input interface 112 may include specific means for communication with one or more sensor devices 122 such as a camera, microphone, medical sensor, weather sensor and/or the like. Similarly, the output interface 115 may include specific means for communication with one or more display devices 125 such as a loudspeaker, display, direct interface with a medical device and/or the like. Furthermore, the display device may comprise a model, device, and/or the likes, which executes further processing on the inferences generated by the system.

As used herein, the term "data record" should be construed to comprise one or more data records being images. Data records may be unimodal or multimodal, and may also comprise lexical information such as words, sentences, symbols, letters and/or the likes.

Data records may be received through the input interface 112, from the storage medium 116, and/or the likes. It should be emphasized that it also comprises batches of data records, as introduced to machine learning models in some applications.

The processor 111 may be homogenous or heterogeneous and may include one or more processing nodes arranged for parallel processing, as clusters and/or as one or more multi-core processors. The storage medium 116 may include one or more non-transitory persistent storage devices, for example, a hard drive, a Flash array, a removable media, and/or the like. The storage medium 116 may also include one or more volatile devices, for example, a random access memory (RAM) component and/or the like. The storage medium 116 may further include one or more network storage resources, for example, a storage server, a network attached storage (NAS), a network drive, and/or the like, accessible via one or more networks through the input interface 112 and the output interface 115. Furthermore, faster access storage hardware such as dedicated registers, latches, caches and/or the likes may be used to enhance processing speed.

The processor 111 may execute one or more software modules such as, for example, a process, a script, an application, an agent, a utility, a tool, an operating system (OS) and/or the like each comprising a plurality of program instructions stored in a non-transitory medium within the program code 114, which may reside on the storage medium 116. For example, the processor 111 may execute a process, comprising inference or training of a device with temporal filtering such as process 200, 300, which will be described in FIG. 2 and FIG. 3. The processor 111 may generate inferences, such as classification, object detection, anomaly detection, segmentation, de-noising, super resolution, semantic analysis, voice interpretation, and/or the like, Furthermore, the processor 111 may execute one or more software modules for online or offline training of one or more layers of the layered machine learning model, as well as auxiliary models.

Reference is also made to FIG. 2, which is a basic flow chart of an exemplary process for training a device with temporal filtering for inference from data records, according to some embodiments of the present disclosure. The exemplary process 200 may be executed for a variety of automatic and semi-automatic purposes involving inference, for example analytics, surveillance, video processing, voice processing, maintenance, medical monitoring and/or the like. The process 200 may comprise different processing flows for a first feeding iteration and consecutive feeding iterations, for example a second feeding iteration.

The process 200 may start with the first feeding iteration 210, which starts, as shown in 211, by feeding a first data record to a layered machine learning model to acquire a first inference. The first data record may be received from a plurality of stored or real-time data records documenting a plurality of sensor readings. As an example, the data records may comprise an input from a digital camera. In some other examples, the data records may comprise voice samples, a medical signal, one or more time series, and/or the likes. The process may comprise processing the first data record by the main branch of the layered machine learning model and one or more side branches.

The process may continue, as shown in 212, by setting an exit value for the side branch exit point based on first iteration values of the interim layer. The exit value may be obtained as a result of the first feeding iteration processing the first data record by the model, comprising a main branch and one or more side branches. The processing of the first data record by the layered machine learning model generates inference through the main branch, as well as interim values. The exit value may be based on a plurality of values, which are generated specifically for that purpose or as an interim processing stage of the inference. These values are generated by the elements of the layered machine learning model, which may also be referred to as nodes, neurons, perceptrons, and/or the likes. A layer may comprise a plurality of elements, which are arranged as a vector, matrix, a higher dimension tensor, a particular structure tailored to the machine learning tasks, an automatically generated structure, and/or the likes. Layers may be specific for the main branch, one or more side branches, or used by all, or more than one of the branches. The stored values may comprise element outputs from some interim layer, and/or from the side branch. Furthermore, these values may comprise the inference, outputs from the main branch, and/or any layer or part of the machine learning model. These values may be stored to enable future comparisons and shortcut inferences.

As shown in 213, the process may continue by setting an inference rule based on the first inference, which may be a label, a baseline for further calculations, and/or the likes.

The process may continue with the second feeding iteration 220. The second iteration 220 may start, as shown in 221, by feeding a second data record to the layered machine learning model, thereby generating a plurality of test values. Processing a second or another following data record by the layered machine learning model generates a plurality of following values, or second iteration values. Some of these following values may be associated with stored values, and may be referred or used as a basis for the test values. Followingly, one or more sets of exit values stored in storage medium 116 may be compared to a set of values generated by processing a following data record.

The process may continue, as shown in 222, with calculating at least one measure of distance between the first data record and the second data record. The measure of distance may be associated with the distance between the first iteration values and the second iteration values, or between one or more exit values from a first data record and test values of the second data record. It should be noted that the values of elements in layered machine learning models, as well as stored values obtained therefrom, form a high dimensional space, such as a Hilbert space. Similarly, a subspace, for example a Hilbert subspace based on elements from one or more layers, may be defined. A metric, such as a Hilbert metric, may be defined in several ways and give rise to one or more measures of a distance. Euclidean distance is a low-dimensional example of a measure of a distance. The Hilbert metric may be checked against some criteria. The criteria may comprise a threshold on a Hilbert metric based on values of elements in layered machine learning models and corresponding values obtained from one or more former data records, which may be stored in storage medium 116. The Hilbert metric may be used as a measure of distance, which may be, for example, a sum of absolute value differences L1. Alternatively, the measure of distance may be a quadratic sum of value differences L2. Additionally, the distance measure may be a weighted sum combination of L1 and L2 at one or more of the values stored. Furthermore, the distance measure may be a weighed sum of non-integer powers of value difference, or of other functions such as exponents, logarithms, hyperbolic trigonometric functions, and/or the like. In other examples, the accumulation of distances is done in ways other than summation, such as counting values over a certain threshold, geometric sum, and the likes. Alternatively, the distance may be angular. Alternatively, distance may be based on non-monotone functions, for example, in cases of comprising periodic functions.

In 223, the process may check whether the consecutive data record label, i.e., in the present case, the second data record label, matches, or complies with a data record label from the preceding processing, i.e., in the present case, a comparative first data record label. In case a label match exists, the changes in reference to comparative stored values may preferably be considered insignificant. In case labels do not match, the changes in reference to comparative stored values may preferably be considered significant enough to trigger continuing the consecutive data record processing through further layers of the layered machine learning model. In the first feeding iteration 210, when the processed data record is the first one of a sequence of data records, there may be no stored values to compare to and, thus, processing through further layers may be required. Furthermore, during training, updating parameters for further side branches and/or the main branch may be desirable, and, thus, branch exits may not be actually executed.

Optionally, a cost, or a loss function is defined for the optimization and the parameter updating performed during training. One example for a loss function is triplet loss, which is optimized as follows:
- optimize function to generate a maximum distance for non-matching inputs.
- optimize function to generate a minimum distance for matching inputs.

Triplet loss training may comprise presenting a reference input, a matching input, and a non-matching input simultaneously. Other cost or loss functions, such as pairwise ranking, additive, angular, contrastive, and/or the likes and/or surrogates and variants thereof may be optimized during training by updating parameters associated with one or more layers of a layered machine learning model.

The process may continue by updating values of layer parameters, to decrease one or more distance measures between the first values, which were generated while processing the first data having a matching label, and comparative second values, as shown in 224. Furthermore, the process may continue by updating values of layer parameters, to increase one or more distance measures between the first values, which were generated while processing the first data not having a matching label and second values generated by processing the second data, as shown in 225.

It should be emphasized that other considerations, such as a number of non-zero weight parameters, other regularization measures, compliance with various standards and regulations, and/or the likes may also apply to the optimization process, and/or the loss function.

The order of data records fed to the layered machine learning model for training may be random, however, a constrained or deterministic order of data record may be preferred, since changes between consecutive data records are more meaningful than random changes.

Stochastic gradient descent is an exemplary method for updating layer parameters. However, other optimization methods and variants thereof may be used. For example, adaptive learning rates such as Adam or Adagrad, and/or momentum.

It should be noted that transfer learning, and other supervised, semi-supervised, or unsupervised training methods known to the skilled in the art, including methods otherwise regarding or disregarding the side branches, may be used for a part, or for the entire training of the layered machine learning model.

It should also be noted that other embodiments of the disclosure may be used without explicitly training the test values of the side branches to generate a maximum or minimum distance based on inference matching, and/or the use of methods such as triplet loss to enhance embedding.

It should be noted that temporal filtering refers to processing of one or more sequences of data records, wherein inference rules, such as labels, from a former data record, may be stored and used to enable faster processing of following data records. When temporal filtering is used, some layers of a layered machine learning model, which may be characterized by belonging to the main branch, or side branches other than the first side branch, may be turned off or skipped.

As used herein, the term "layer parameters" should be construed to comprise sets of one, some, or all parameters of one or more layers in a layered machine learning model. Examples of layer parameters comprise weights, biases, activation thresholds, offsets, and/or the likes. Furthermore, a layer parameter may be associated with one or more elements in the layer.

Reference is now made to FIG. 3, which is a flow chart of an exemplary process with temporal filtering for inference from data records, according to some embodiments of the present disclosure.

The exemplary process 300 allows early exit and decision for many data records, thereby saving processing time, energy, memory bandwidth, and the likes. The process 300 may be executed for one or more automatic and/or semi-automatic inference tasks, for example, analytics, surveillance, video processing, voice processing, maintenance, medical monitoring, and/or the like. The process 300 may also comprise different processing flows for a first feeding iteration and consecutive feeding iterations.

The process 300 may start by a first feeding iteration 310. The first feeding iteration 310 may start, as shown in 311, by feeding a first data record to a layered machine learning model to acquire a first inference, the layered machine learning model having a main branch and a side branch. The first data record may be processed by a main branch and one or more side branches of the layered machine learning model, as side branches may have neither stored interim values, nor stored inferences.

The process 300 may comprise, as shown in 312, setting an exit value for the side branch exit point based on first iteration values of the interim layer obtained as a result of the first feeding iteration. The exit value may be generated by elements of the layered machine learning model, when feeding the first data record to the layered machine learning model. The exit value may comprise and/or be based on outputs from some interim layer, and/or from logic specific to the side branch. Alternatively, the exit value may comprise outputs from the main branch, and/or any layer or part of the machine learning model. Furthermore, the process 300 may comprise setting an inference rule based on the first inference, as shown in 313. The inference rule may be based on an inference generated by feeding the first data record through the main branch, for inferences to be made on following data records. The inferences, on which a stored inference rule is based, may be referred to as first inferences.

The process 300 may continue with a consecutive feeding iteration, for example the second feeding iteration 320. Further following feeding iterations, such as a third feeding iteration, may be executed similarly. The second feeding iteration 320 may start, as shown in 321, by feeding a second data record to the layered machine learning model to obtain second iteration values of the interim layer as a result of the second feeding iteration. The second data record may be evaluated using one or more layers of the layered machine learning model. The processing of a second data record by early and interim layers of the layered machine learning model generates values at elements of the network layers, and values comparative to the first iteration values may form second iteration values. The process 300 may comprise, as shown in 322, calculating at least one measure of a distance between the first iteration values and the second iteration values, or between exit values stored from an evaluation of a former data record and the test values generated from the second data record.

The process 300 may continue, as shown in 323, by determining, at an exit point, whether at least one compliant measure of a distance indicates compliance of the second iteration values with the exit value of the side branch exit point. The measure of the distance may be calculated from current test values, or the second iteration values, to at least one of the stored sets of exit values, which were generated while processing former data records, such as, for example, the first data record. A compliant measure of a distance may enable the exit point.

When there is a compliant measure of a distance indicating a proximity to a former record, as shown in 324, the processing of the second data record may exit inferring from the second data record and continue based on the inference rule, which was stored, while the first data record was processed, in 312. According to an example, the inference rule provides the complete inference.

When value changes are significant and there is no compliant measure of a distance corresponding to a former record and indicating proximity, as shown in 325, the process may continue inferring from the second data record based on additional layers of the machine learning model. These layers may include the main branch and/or additional side branches. Optionally, the process may continue on the same device, however, some alternatives may comprise triggering another device to continue the processing, evaluate the data record independently, and/or the likes. Furthermore, in the first feeding iteration 310, when the processed data record is a first one of a sequence of data records, there may be no stored values to compare to and, thus, processing through further layers may be required.

The values and inferences generated from the second data record, or further following data records, may be referred to as second inferences. These inferences may also be stored for following data record evaluation, in addition to stored values and inferences, or instead. When these inferences are stored, they may be referred to as first inferences for further following data records. Alternatively, the former stored values and inferences may be kept stored instead.

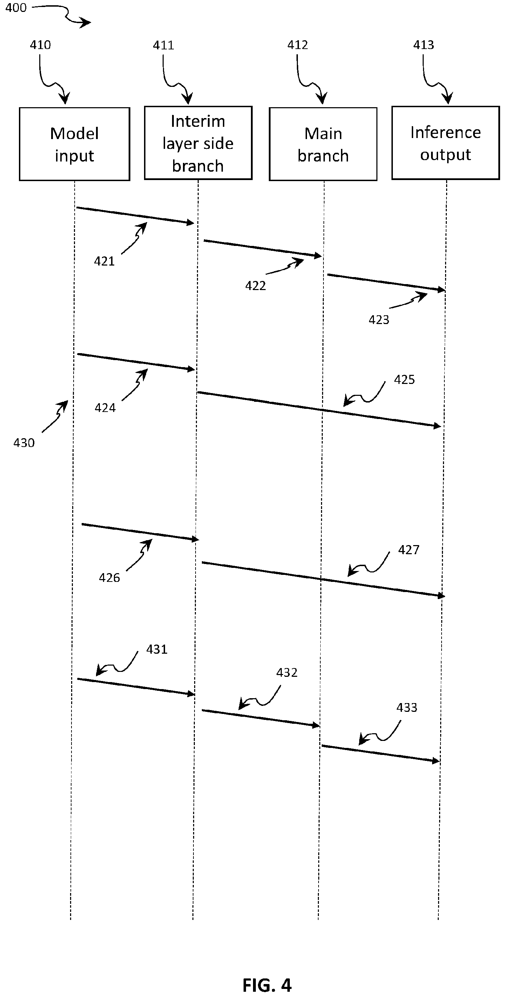

Reference is now made to FIG. 4, which is a sequence diagram describing an exemplary process with temporal filtering for inference from data records, according to some embodiments of the present disclosure. The exemplary sequence 400 exemplifies a sequence of inferences associated with a process such as process 300 described in FIG. 3. According to some implementations of the exemplary process with temporal filtering for inference from data records, the process starts by receiving an exemplary model input 410, comprising an interim layer side branch 411. The layered machine learning model further comprises a main branch 412, which may follow and/or comprise additional layers, and an inference output 413 for producing the inference. Code or logic associated with the inference output 413 may determine when to use the main branch 412 or apply the inference rule, as shown, for example, in step 323 and the following options 324 and 325 of the process illustrated in FIG. 3. The timeline is depicted for each agent, such as the model input 410, as a descending line, such as the descending line 430 for the model input 410.

The exemplary sequence 400 is initiated as the first data record is fed to the layered machine learning model at 421. The first data record may comprise, for example, an image from a surveillance camera. Since no former data record was processed by the layered machine learning model, no measure of a distance corresponding to a former record may be compliant by indicating proximity. Therefore, the interim layer side branch 411 stores some values to enable distance measurements for following data records, and the processing continues as shown in 422 through additional layers comprising the main branch 412. Followingly, as shown in 423, the inference output 413 forwards the inference made by the main branch 412 of the layered machine learning model. An inference rule based on the inference is also stored for enabling the side branch exit, when compliant following data records are processed by the layered machine learning model.

Followingly, in this example, a second data record is fed to the layered machine learning model at 424. The second data record may comprise, for example, a second image from the same surveillance camera. The interim layers and side branch process the second data record and calculate the second iteration values and a measure of a distance between the first iteration values and the second iteration values, i.e. between the values stored while processing the first data record and the comparative values generated from the second data record. In this example, when the image has no significant changes, the measure of a distance may be below a threshold, and the measure of a distance meets the exit value criteria. Consequently, the inference may generate the same output as it generated for the first data record at 425. Similarly, at 426, a following data record may also account for no significant changes in the test values, and, thus, may be processed only by the earlier and interim layers associated with the side branch. Followingly, at 427, the layered machine learning model may generate the inference, based on the inference rule generated by processing matching former data records.

Followingly, in this example, as shown in 431, the data record introduced to the layered machine learning model has one or more significant changes. Therefore, when the test values generated thereby are compared to stored exit values obtained from processing former data records, after the processing by the earlier and interim layers associated with the side branch, the calculated measure of a distance may exceed a threshold, and meet no exit criteria. Followingly, the data record processing continues, as shown in 432, through additional layers of the layered machine learning model, for example, the main branch 412, and the inference generated by the main branch 412 is generated, as shown in 433.

It should be noted that, in the exemplary process of surveillance, significant changes may include one or more people entering the observed area, abrupt behavior, entrance of a large, dangerous animal, and/or the like. Similarly, changes in lighting, slight movements, movements of small animals such as insects, may be considered insignificant changes. However, the disclosure is not limited to these examples, and may be used, for example, for animal identification, monitoring weather, lighting, bird migration, and/or the likes. Furthermore, the disclosure may be applied on audio, voice, time series, industrial machinery indicators, sensors attached to robots, smart home sensors, smart factory sensors, medical indexes, and/or the likes, and the significance of changes may be derived by labels associated with criteria from commerce, safety, medicine, and/or the likes.

Additionally, the threshold or other criteria to determine when inference can be made at the side branch, based on a measure of a distance, may be determined in accordance with several constraints and tradeoffs. A higher threshold that enables side branch exits for data records that would otherwise require processing through additional layers may save more load on memory, processing power, and energy consumption, at a cost of precision.

Furthermore, for the sake of simplicity, the exemplary sequence 400 depicts an example where one set of values with a corresponding inference result is stored for later calculation of measures of a distance and exiting the inference at a side branch. Additional sets can be stored, rendering the comparison more complex and storage requirement larger. However, they enable the faster side branch exit more often. This may be useful, for example, when data records usually fit into a few categories. Furthermore, although the sequence diagram of the exemplary sequence 400 depicts an implementation with a single side branch, it is noted that multiple side branches may be implemented, with an identical or a different number of stored value sets. Additional side branches and stored sets of value may account for meeting side branch exit criteria more often. This saves more load on memory, processing power, and energy consumption, at the price of more complex side branch logic.

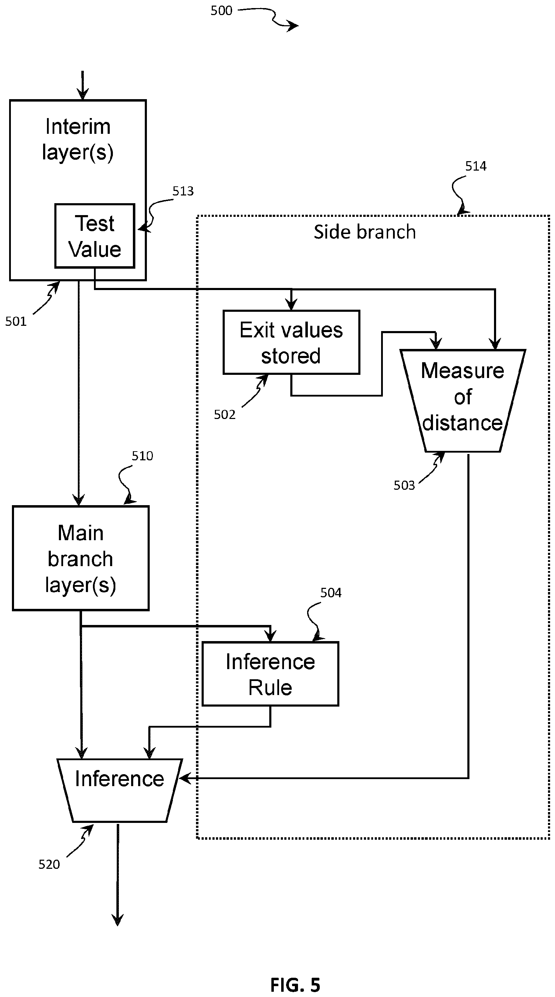

Reference is now made to FIG. 5, which is a sequence diagram illustrating an exemplary process 500 with temporal filtering for inference from data records involving a side branch 514, according to some embodiments of the present disclosure.

During processing of one or more data records, for example, the first feeding iteration feeding the first data record, one or more values from one or more layers may be stored as exit values, as shown in 502, and the associated inference rule may be stored, as shown in 504. Optionally, the exit values are the first iteration values, however these values may be updated and other iterations may be considered as the first iteration for following feeding iterations. During processing of following data records, for example, the second data record, during the second feeding iteration, one or more outputs from one or more interim layers 501 of the layered machine learning model may be taken as a test value 513. For simplicity, the test value(s) 513 may be referred to as second iteration value(s), however, the measure of a distance may be similarly calculated for other iterations. The test value 513 is compared to corresponding values from one or more sets of values stored as exit values from former data records 502, to form a measure of a distance, as shown in 503. Alternatively, the exit values, as well as the values compared to them, may be processed before storage, and comparatively the test value 513 may be processed before comparison. This may be done for memory saving, noise reduction, filtering of other irrelevant features, and/or the likes.

Inferences generated during feeding cycles other than the first feeding iteration may be referred to as second inferences. When the exit criteria is met by the measure of a distance from test values 513 to at least one of the associated stored exit values, the inference 520 may be generated based on a stored inference rule 504, which is associated with a former inference stored therein. Meeting an exit criterion enables the early side branch exit, since the further main branch layers 510 are not needed for further processing. Thus, the resources of a processor and a storage medium of an inference device, for example, the processor 111 and storage medium 116 of the inference device 100 shown in FIG. 1, can be available for following data records or put to a power saving mode. When the exit criterion is not met, the data record is processed by further layers, for example, the main branch layer(s) 510, to generate the inference value 520. This value may also be stored for future inferences, however, some implementations may keep the stored values and labels unchanged.

It should be noted that, for the sake of simplicity, the sequence diagram of the exemplary process 500 shown in FIG. 5 depicts one set of values with a corresponding inference result stored for later calculation of measures of a distance and exiting the inference at a side branch 514, where a single side branch is used. Implementations may feature additional branches and stored values. Additionally, multiple measures of a distance may be used, wherein some examples were mentioned in the description of FIG. 3.

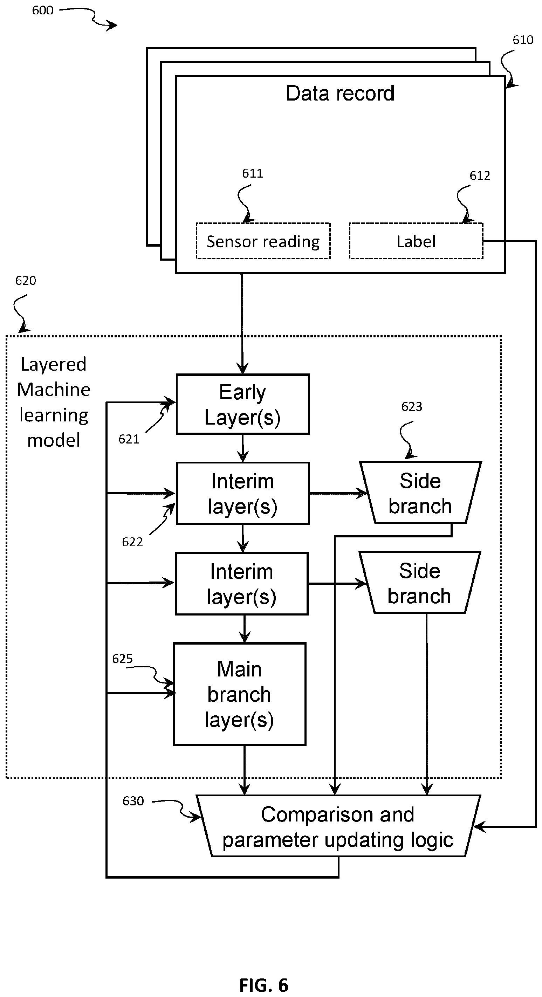

Reference is now made to FIG. 6, which is a diagram illustrating a computer-implemented method of training a device with temporal filtering for inference from data records, according to some embodiments of the present disclosure.

The described training method is an exemplary supervised training method. However, it should be noted that other methods may also be used. For example, student-teacher training may be applied. The training may be executed on systems other than the devices intended to execute the inference, for example, when the inference device is a low-power, low CPU device.

In this example, the data record 610 comprises at least one sensor reading 611 and a label 612. The sensor reading 611 may be from a device, such as a camera or a microphone, and/or the likes, connected to the input interface 122, a prerecorded and pre-labelled entry, a time series generated by some preprocessing, simulation, rendering, and/or the likes. The label 612 may comprise a class, detection of one or more object, segmentation, a semantic label associated with the sensor reading or its interpretation, and/or the likes.

The training comprises one or more iterations, in which one or more data records are fed to the layered machine learning model 620, and the inference generated by the layered machine learning model is compared to the label 612.

The comparison and parameter updating logic 630 may control updating one or more parameters in one or more layers. A processor of an inference device, such as the processor 111 of the inference device 100 shown in FIG. 1, may update one or more of these layer parameters so that the main branch 625 inference matches the label 612. The adjusted layer parameters may comprise specific main branch layers 625. The adjusted layer parameters may further comprise interim layer parameters 622. Additionally, the adjusted layer parameters may comprise early layer parameters 621. It should be noted that the training may differ for different side branches, for example, some branches may be used for different aspects of similarity, or may not be specifically trained.

At least one layer of the machine learning model may comprise layer parameters and layer parameters are adjusted by the comparison and parameter updating logic 630 according to algorithms mentioned in the description of FIG. 2.

Layer parameter adjustment may comprise updating values of some layer parameters in early layers 621 and interim layers 622, to decrease at least one distance between exit values and test values, to indicate proximity when the second data record label is compliant with a comparative first data record label. The reduced distance may be, for example, comprised by a side branch 623. It should be noted that processing a data record may continue also when a side branch exit criteria is matched, since training further layers may be more important than performance or power saving during training.

Layer parameter adjustment may also comprise updating values of some layer parameters in 621, 622, to increase a distance between exit values and test values, when the second data record label is not compliant with a comparative first data record label. The reduced distance may be, for example, comprised by a side branch.

Additionally, the training may comprise updating values of some layer parameters in 621, 622 and main branch layers 625, to generate at the main branch a label compliant to the data record label 612.

Furthermore, the training may comprise updating values of some layer parameters in 621, 622 to generate, at a side branch exit point, a label and/or another inference compliant to the data record label at the main branch.

The use of more than one path from input to output, with different depths, in neural network training may help mitigate problems such as regularization and vanishing gradients. It should also be noted again that other embodiments of the disclosure may be used without explicit training of side branches as auxiliary classifiers, and/or use of methods such as triplet loss to enhance embedding.

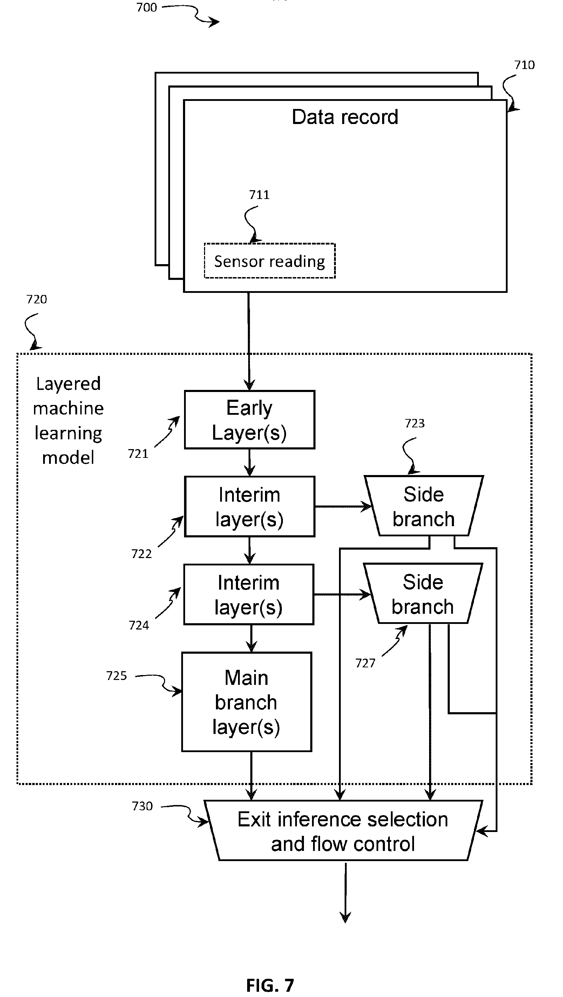

Reference is now made to FIG. 7, which is a diagram illustrating an exemplary computer-implemented method with temporal filtering for inferencing from data records, according to some embodiments of the present disclosure.

It should be noted that this diagram of an exemplary multi-branch method comprises two side branches, however, the disclosure is not limited to this number, and a single, or additional side branches may be used. In this example, the data record 710, which comprises at least one sensor reading 711, is introduced to the layered machine learning model 720. The data record is first processed by the early layers 721, and later by the interim layer(s) 722 and the associated side branch 723. The side branch exit point may conclude the inference when an exit criterion is met by the measure of a distance between a stored value from a former iteration and the current, second iteration values. When the measure of a distance is compliant, for example, below a threshold applied on a non-decreasing function thereof, the exit inference selection and flow control 730 may generate the inference, associated with the stored inference rule, and the layered machine learning model 720 may process the next record or shift to a power saving state. It should be noted that the illustrated example shows a similar process for the two side branches, however, implementations may control the processing and inferences associated with each side branch differently, for example, one side branch may store an inference as the inference rule, and another may produce it as a function of the test values and the inference rule. When no exit criterion is met, the data record may be further processed by additional interim layer(s) 724 and the associated side branch 727. Similarly, in case an exit criterion is met by the measure of a distance between the first iteration values and the second iteration values, or of the test value from a stored exit value, the exit inference selection and flow control 730 may generate the label associated with the stored value, and the layered machine learning model 720 may process the next record or shift to a power saving state. In case an exit criterion is not met by the measure of a distance from a stored value, the data record is also processed by the main branch layer(s) 725 and its inference is selected by the exit inference selection and flow control 730.

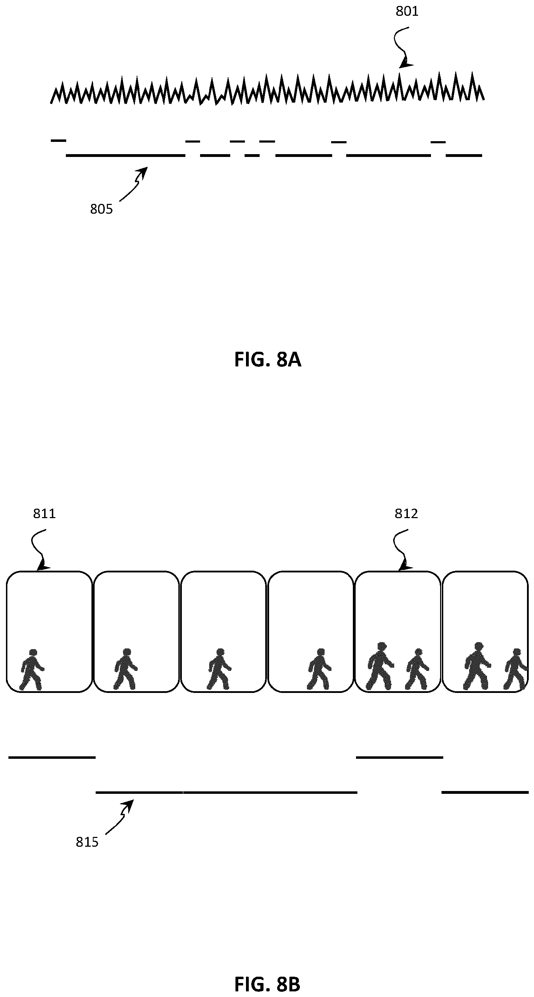

Reference is now made to FIG. 8A, which is directed to an unclaimed embodiment, which depicts an exemplary time series processed by an exemplary inference device with temporal filtering, and a respective indication when the device main branch is activated, according to some embodiments of the present disclosure. In this example, the inference device analyzes a signal 801. The signal 801 may be a voice sample for a device configured to receive vocal instructions, a medical signal such as an electroencephalogram, a sales rate of one or more products through one or more channels, or the likes. Optionally, the inference device may be in a standby mode waiting for a keyword or an event, and when inputs can be distinguished from that keyword or event already by early, simple evaluation, the power saving enabled thereby is significant. It should be emphasized that a scalar, short-cycled, signal was chosen for the sake of clarity, and implementations may have vectors, matrices, or tensors of signals, and may comprise signals of different characteristics and/or sources in the data records. The signal 805 exemplifies when the main branch may be active with a high value, and when an exit criterion is met at the side branch with the low value. When an exit criterion is met, or the measure of a distance between the first iteration values and the second iteration values or between the exit values and test values indicate proximity, the side branch may generate the inference based on the stored inference rule with high confidence, saving the CPU, memory bandwidth, power consumption, and/or the likes that would otherwise be consumed by executing the main branch evaluation. In this example, the first data record, together with some instances of significant changes in the signal pattern, result in activating the main branch. It should be emphasized that this is an example, and implementations may exhibit different patterns of main branch activation.

Reference is now made to FIG. 8B, which depicts an exemplary sequence of images processed by an exemplary inference device with temporal filtering, and a respective indication when the inference device main branch is activated according to some embodiments of the present disclosure. The data record sequence 811 in this example is a sequence of images that may be captured, for example, by a security camera. The signal 815 exemplifies when the main branch may be active with a high value, and when a side branch may generate the inference with high confidence, with the low value. In this example, the first data record, together with significant change in the image, such as ingress of an additional person in 812, result in activating the main branch, and saving resources such as energy and bandwidth when no significant change occurred. It should be mentioned again that this is an example, and implementations may exhibit different patterns of main branch activation.

It is expected that, during the life of a patent maturing from this application, many relevant machine learning and neural network architectures, meta architectures, and training methods will be developed and the scope of the term layered machine learning model is intended to include all such new technologies *a priori.* For example, the term "training" is intended to include, in addition to gradient descent and known optimization methods, alternative training methods such as genetic algorithms, methods involving randomization, variable splitting methods, semi-supervised and unsupervised methods, non-convex optimization methods and the likes are expected to be developed or popularized.

The terms "comprises", "comprising", "includes", "including", "having" and their conjugates mean "including but not limited to".

As used herein, the term "sum" should be construed to comprise other non-decreasing functions such as geometric sum, logarithmic sum, counting of non-zero values, and or the like.

As used herein, the term "proximity" should be construed to comprise various measures of similarity, for example, in values of periodic functions, which may be applied on the compared values.

As used herein, the singular form "a", "an" and "the" include plural references unless the context clearly dictates otherwise. For example, the term "a compound" or "at least one compound" may include a plurality of compounds, including mixtures thereof.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

## Claims

1. A device (100) configured to generate inferences from data inputs, for removing noise from image data inputs, using a layered machine learning model having a main branch and at least one side branch, the main branch having a main branch exit point at an output layer of the layered machine learning model and the side branch having a side branch exit point at an interim layer of the layered machine learning model, the device comprising:
a processor (111) configured for:
in a first feeding iteration, feeding a first data input to the layered machine learning model to acquire a first inference by feeding the first data input through the main branch;
setting an exit value for the side branch exit point being first iteration values of the interim layer obtained as a result of the first feeding iteration;
setting an inference rule based on the first inference, the inference rule comprising instructions to reuse the first inference when a distance proximity condition is met;
in a second feeding iteration, feeding a second data input to the layered machine learning model to obtain second iteration values of the interim layer as a result of the second feeding iteration and further obtain a test value, the test value being one of the second iteration values;
calculating at least one measure of a distance between the exit value and the test value; and
generating a second inference based on the at least one measure of a distance between the exit value and the test value, and the inference rule, wherein:
if the at least one measure of a distance between the exit value and the test value meets the proximity condition of the inference rule, reuse the first inference as the second inference, and
otherwise, generating the second inference from the second data input based on additional layers of the machine learning model;
wherein the layered machine learning model is a neural network comprising a plurality of convolutional layers.

2. The device of claim 1, wherein the at least one measure of a distance between the first iteration values and the second iteration values is calculated based on a Hilbert metric of the exit value and the test value, the test value being obtained by feeding the second data input to the layered machine learning model.

3. The device of claim 2, wherein at least one layer of the layered machine learning model is at least partially shared by the at least one side branch and the main branch, and wherein the test value comprises values from the at least one layer.

4. A computer-implemented method of generating inferences from data inputs, for removing noise from image data inputs, using a layered machine learning model having a main branch and at least one side branch, the main branch having a main branch exit point at an output layer of the layered machine learning model and the side branch having a side branch exit point at an interim layer of the layered machine learning model, the method comprising:
in a first feeding iteration:
feeding (311) a first data input to the layered machine learning model to acquire a first inference by feeding the first data input through the main branch;
setting (312) an exit value for the side branch exit point being first iteration values of the interim layer obtained as a result of the first feeding iteration;
setting (313) an inference rule based on the first inference, the inference rule comprising instructions to reuse the first inference when a distance proximity condition is met;
in a second feeding iteration:
feeding (321) a second data input to the layered machine learning model to obtain second iteration values of the interim layer as a result of the second feeding iteration and further obtain a test value, the test value being one of the second iteration values;
calculating (322) at least one measure of a distance between the exit value and the test value; and
generating (323-325) a second inference based on the at least one measure of a distance between the exit value and the test value, and the inference rule, wherein:
if the at least one measure of a distance between the exit value and the test value meets the proximity condition of the inference rule, reuse the first inference as the second inference, and
otherwise, generating the second inference from the second data input based on additional layers of the machine learning model;
wherein the layered machine learning model is a neural network comprising a plurality of convolutional layers.

5. The computer-implemented method of claim 4, wherein the at least one measure of a distance between the first iteration values and the second iteration values is based on a Hilbert metric of the exit value and the test value, the test value being obtained by feeding the second data input to the layered machine learning model.

6. The computer-implemented method of claim 5, wherein at least one layer of the layered machine learning model is at least partially shared by the at least one side branch and the main branch, and wherein the test value comprises values from the at least one layer.

7. A computer readable medium having instructions stored thereon, which, when executed by a computer, cause the computer to carry out the computer-implemented method of any one of claims 4 to 6.

## Patentansprüche

1. Vorrichtung (100), die dazu konfiguriert ist, Schlussfolgerungen aus Dateneingaben zu erzeugen, um Rauschen aus Bilddateneingaben zu entfernen, indem ein geschichtetes maschinelles Lernmodell verwendet wird, das über einen Hauptzweig und mindestens einen Seitenzweig verfügt, wobei der Hauptzweig über einen Hauptzweig-Austrittspunkt in einer Ausgabeschicht des geschichteten maschinellen Lernmodells verfügt und der Seitenzweig über einen Seitenzweig-Austrittspunkt in einer Zwischenschicht des geschichteten maschinellen Lernmodells verfügt, wobei die Vorrichtung Folgendes umfasst:
einen Prozessor (111), der zu Folgendem konfiguriert ist:
bei einer ersten Zuführungsiteration, Zuführen einer ersten Dateneingabe in das geschichtete maschinelle Lernmodell, um eine erste Schlussfolgerung zu erhalten, indem die erste Dateneingabe durch den Hauptzweig zugeführt wird;
Einstellen eines Austrittswerts für den Seitenzweig-Austrittspunkt als erste Iterationswerte der Zwischenschicht, die als ein Ergebnis der ersten Zuführungsiteration erlangt werden;
Einstellen einer Schlussfolgerungsregel basierend auf der ersten Schlussfolgerung, wobei die Schlussfolgerungsregel Anweisungen umfasst, die erste Schlussfolgerung wiederzuverwenden, wenn eine Distanz-Nähe-Bedingung erfüllt ist;
bei einer zweiten Zuführungsiteration, Zuführen einer zweiten Dateneingabe in das geschichtete maschinelle Lernmodell, um zweite Iterationswerte der Zwischenschicht als ein Ergebnis der zweiten Zuführungsiteration zu erlangen und ferner einen Prüfwert zu erlangen, wobei der Prüfwert einer der zweiten Iterationswerte ist;
Berechnen mindestens eines Maßes einer Distanz zwischen dem Austrittswert und dem Prüfwert; und
Erzeugen einer zweiten Schlussfolgerung basierend auf dem mindestens einen Maß einer Distanz zwischen dem Austrittswert und dem Prüfwert und der Schlussfolgerungsregel, wobei:
wenn das mindestens eine Maß einer Distanz zwischen dem Austrittswert und dem Prüfwert die Nähebedingung der Schlussfolgerungsregel erfüllt, Wiederverwenden der ersten Schlussfolgerung als die zweite Schlussfolgerung und,
wenn nicht, Erzeugen der zweiten Schlussfolgerung aus der zweiten Dateneingabe basierend auf zusätzlichen Schichten des maschinellen Lernmodells;
wobei es sich bei dem geschichteten maschinellen Lernmodell um ein neuronales Netzwerk handelt, das eine Vielzahl von Faltungsschichten umfasst.

2. Vorrichtung nach Anspruch 1, wobei das mindestens eine Maß einer Distanz zwischen den ersten Iterationswerten und den zweiten Iterationswerten basierend auf einer Hilbert-Metrik des Austrittswerts und des Prüfwerts berechnet wird, wobei der Prüfwert durch Zuführen der zweiten Dateneingabe in das geschichtete maschinelle Lernmodell erlangt wird.

3. Vorrichtung nach Anspruch 2, wobei mindestens eine Schicht des geschichteten maschinellen Lernmodells zumindest teilweise durch den mindestens einen Seitenzweig und den Hauptzweig gemeinsam genutzt wird und wobei der Prüfwert Werte aus der mindestens einen Schicht umfasst.

4. Computerimplementiertes Verfahren zum Erzeugen von Schlussfolgerungen aus Dateneingaben, um Rauschen aus Bilddateneingaben zu entfernen, indem ein geschichtetes maschinelles Lernmodell verwendet wird, das über einen Hauptzweig und mindestens einen Seitenzweig verfügt, wobei der Hauptzweig über einen Hauptzweig-Austrittspunkt in einer Ausgabeschicht des geschichteten maschinellen Lernmodells verfügt und der Seitenzweig über einen Seitenzweig-Austrittspunkt in einer Zwischenschicht des geschichteten maschinellen Lernmodells verfügt, wobei das Verfahren Folgendes umfasst:
bei einer ersten Zuführungsiteration:
Zuführen (311) einer ersten Dateneingabe in das geschichtete maschinelle Lernmodell, um eine erste Schlussfolgerung zu erhalten, indem die erste Dateneingabe durch den Hauptzweig zugeführt wird;
Einstellen (312) eines Austrittswerts für den Seitenzweig-Austrittspunkt als erste Iterationswerte der Zwischenschicht, die als ein Ergebnis der ersten Zuführungsiteration erlangt werden;
Einstellen (313) einer Schlussfolgerungsregel basierend auf der ersten Schlussfolgerung, wobei die Schlussfolgerungsregel Anweisungen umfasst, die erste Schlussfolgerung wiederzuverwenden, wenn eine Distanz-Nähe-Bedingung erfüllt ist;
bei einer zweiten Zuführungsiteration:
Zuführen (321) einer zweiten Dateneingabe in das geschichtete maschinelle Lernmodell, um zweite Iterationswerte der Zwischenschicht als ein Ergebnis der zweiten Zuführungsiteration zu erlangen und ferner einen Prüfwert zu erlangen, wobei der Prüfwert einer der zweiten Iterationswerte ist;
Berechnen (322) mindestens eines Maßes einer Distanz zwischen dem Austrittswert und dem Prüfwert; und
Erzeugen (323-325) einer zweiten Schlussfolgerung basierend auf dem mindestens einen Maß einer Distanz zwischen dem Austrittswert und dem Prüfwert und der Schlussfolgerungsregel,
wobei:
wenn das mindestens eine Maß einer Distanz zwischen dem Austrittswert und dem Prüfwert die Nähebedingung der Schlussfolgerungsregel erfüllt, Wiederverwenden der ersten Schlussfolgerung als die zweite Schlussfolgerung und,
wenn nicht, Erzeugen der zweiten Schlussfolgerung aus der zweiten Dateneingabe basierend auf zusätzlichen Schichten des maschinellen Lernmodells;
wobei es sich bei dem geschichteten maschinellen Lernmodell um ein neuronales Netzwerk handelt, das eine Vielzahl von Faltungsschichten umfasst.

5. Computerimplementiertes Verfahren nach Anspruch 4, wobei das mindestens eine Maß einer Distanz zwischen den ersten Iterationswerten und den zweiten Iterationswerten auf einer Hilbert-Metrik des Austrittswerts und des Prüfwerts basiert, wobei der Prüfwert durch Zuführen der zweiten Dateneingabe in das geschichtete maschinelle Lernmodell erlangt wird.

6. Computerimplementiertes Verfahren nach Anspruch 5, wobei mindestens eine Schicht des geschichteten maschinellen Lernmodells zumindest teilweise durch den mindestens einen Seitenzweig und den Hauptzweig gemeinsam genutzt wird und wobei der Prüfwert Werte aus der mindestens einen Schicht umfasst.

7. Computerlesbares Medium, das darauf gespeicherte Anweisungen aufweist, die, wenn sie durch einen Computer ausgeführt werden, den Computer dazu veranlassen, das computerimplementierte Verfahren nach einem der Ansprüche 4 bis 6 umzusetzen.

## Revendications

1. Dispositif (100) configuré pour générer des inférences à partir d'entrées de données, afin de supprimer le bruit des entrées de données d'images, en utilisant un modèle d'apprentissage automatique en couches ayant une branche principale et au moins une branche secondaire, la branche principale ayant un point de sortie de branche principale au niveau d'une couche de sortie du modèle d'apprentissage automatique en couches et la branche secondaire ayant un point de sortie de branche secondaire au niveau d'une couche intermédiaire du modèle d'apprentissage automatique en couches, le dispositif comprenant :
un processeur (111) configuré pour :
lors d'une première itération d'alimentation, fournir une première entrée de données au modèle d'apprentissage automatique en couches pour obtenir une première inférence en faisant passer la première entrée de données par la branche principale ;
définir une valeur de sortie pour le point de sortie de branche secondaire comme étant les valeurs de la première itération de la couche intermédiaire obtenues à la suite de la première itération d'alimentation ;
définir une règle d'inférence sur la base de la première inférence, la règle d'inférence comprenant des instructions pour réutiliser la première inférence lorsqu'une condition de proximité de distance est remplie ;
lors d'une seconde itération d'alimentation, fournir une seconde entrée de données au modèle d'apprentissage automatique en couches pour obtenir les valeurs de la seconde itération de la couche intermédiaire à la suite de la seconde itération d'alimentation et obtenir en outre une valeur de test, la valeur de test étant l'une des valeurs de la seconde itération ;
calculer au moins une mesure de la distance entre la valeur de sortie et la valeur de test ; et
générer une seconde inférence sur la base de l'au moins une mesure de distance entre la valeur de sortie et la valeur de test, et la règle d'inférence, dans lequel :
si l'au moins une mesure d'une distance entre la valeur de sortie et la valeur de test satisfait à la condition de proximité de la règle d'inférence, réutiliser la première inférence comme seconde inférence, et
sinon, générer la seconde inférence à partir de la seconde entrée de données sur la base de couches supplémentaires du modèle d'apprentissage automatique ;
dans lequel le modèle d'apprentissage automatique en couches est un réseau neuronal comprenant une pluralité de couches convolutionnelles.

2. Dispositif selon la revendication 1, dans lequel l'au moins une mesure d'une distance entre les valeurs de la première itération et les valeurs de la seconde itération sont calculées sur la base d'une métrique de Hilbert de la valeur de sortie et de la valeur de test, la valeur de test étant obtenue en fournissant la seconde entrée de données au modèle d'apprentissage automatique en couches.

3. Dispositif selon la revendication 2, dans lequel au moins une couche du modèle d'apprentissage automatique en couches est au moins partiellement partagée par l'au moins une branche secondaire et la branche principale, et dans lequel la valeur de test comprend des valeurs provenant de l'au moins une couche.

4. Procédé mis en œuvre par ordinateur pour générer des inférences à partir d'entrées de données, destiné à supprimer le bruit des entrées de données d'images, en utilisant un modèle d'apprentissage automatique en couches ayant une branche principale et au moins une branche secondaire, la branche principale ayant un point de sortie de branche principale au niveau d'une couche de sortie du modèle d'apprentissage automatique en couches et la branche secondaire ayant un point de sortie de branche secondaire au niveau d'une couche intermédiaire du modèle d'apprentissage automatique en couches, le procédé comprenant :
lors d'une première itération d'alimentation :
la fourniture (311) d'une première entrée de données au modèle d'apprentissage automatique en couches pour obtenir une première inférence en faisant passer la première entrée de données par la branche principale ;
la définition (312) d'une valeur de sortie pour le point de sortie de branche secondaire comme étant les valeurs de la première itération de la couche intermédiaire obtenues à la suite de la première itération d'alimentation ;
la définition (313) d'une règle d'inférence sur la base de la première inférence, la règle d'inférence comprenant des instructions pour réutiliser la première inférence lorsqu'une condition de proximité de distance est remplie ;
lors d'une seconde itération d'alimentation :
la fourniture (321) d'une seconde entrée de données au modèle d'apprentissage automatique en couches pour obtenir les valeurs de la seconde itération de la couche intermédiaire à la suite de la seconde itération d'alimentation et obtenir en outre une valeur de test, la valeur de test étant l'une des valeurs de la seconde itération ;
le calcul (322) d'au moins une mesure d'une distance entre la valeur de sortie et la valeur de test ; et
la génération (323- 325) d'une seconde inférence sur la base de l'au moins une mesure d'une distance entre la valeur de sortie et la valeur de test, et la règle d'inférence, dans lequel :
si l'au moins une mesure d'une distance entre la valeur de sortie et la valeur de test satisfait à la condition de proximité de la règle d'inférence, réutiliser la première inférence comme seconde inférence, et
sinon, générer la seconde inférence à partir de la seconde entrée de données sur la base de couches supplémentaires du modèle d'apprentissage automatique ;
dans lequel le modèle d'apprentissage automatique en couches est un réseau neuronal comprenant une pluralité de couches convolutionnelles.

5. Procédé mis en œuvre par ordinateur selon la revendication 4, dans lequel l'au moins une mesure d'une distance entre les valeurs de la première itération et les valeurs de la seconde itération sont basées sur une métrique de Hilbert de la valeur de sortie et de la valeur de test, la valeur de test étant obtenue en fournissant la seconde entrée de données au modèle d'apprentissage automatique en couches.

6. Procédé mis en œuvre par ordinateur selon la revendication 5, dans lequel au moins une couche du modèle d'apprentissage automatique en couches est au moins partiellement partagée par l'au moins une branche secondaire et la branche principale, et dans lequel la valeur de test comprend des valeurs provenant de l'au moins une couche.

7. Support lisible par ordinateur ayant des instructions stockées sur celui-ci, qui, lorsqu'elles sont exécutées par un ordinateur, amènent l'ordinateur à exécuter le procédé mis en œuvre par ordinateur selon l'une quelconque des revendications 4 à 6.
